# EUROPEAN PATENT APPLICATION

(11) **EP 4 730 471 A1**
(43) Date of publication of application: **22.04.2026**
(21) Application number: 25209315.8
(22) Date of filing: 17.10.2025
(51) Int. Cl.: H01M 10/058, H01M 10/04, H01M 10/42, H01M 50/471, H01M 4/13, H01M 4/38, H01M 4/48, H01M 4/505, H01M 4/587, H01M 4/525, H01M 50/414, H01M 4/62, H01M 10/0525, H01M 10/44, H01M 10/0568, H01M 4/133, H01M 4/131, H01M 4/134

(54) **LITHIUM-ION SECONDARY BATTERY, POSITIVE ELECTRODE STRUCTURE THEREOF, AND CHARGING AND DISCHARGING METHOD THEREFOR**

(30) Priority: 17.10.2024 US 202418918089; 25.12.2024 US 202463738768 P; 16.10.2025 US 202519359700
(71) Applicant: CYNTEC CO., LTD., Hsinchu 30076 (TW)
(72) Inventor: Chang, Yu-Hsiu, 30076 Hsinchu (TW); Wei, Pei-I, 30076 Hsinchu (TW); Wu, Tsung-Chan, 30076 Hsinchu (TW)
(74) Representative: Straus, Alexander

(57) **Abstract**

A lithium-ion secondary battery (20) is provided in the present disclosure, including a positive electrode (PE) with a first current collector (100) and a first active material (108), a negative electrode (NE), a separator (106) between the positive electrode (PE) and the negative electrode (NE), a field electrode (FE) at one side of the positive electrode (PE) opposite to the negative electrode (NE), and a first insulating layer (110) isolated between the positive electrode (PE) and the field electrode (FE).

## Description

### Field of the Invention

The present disclosure relates generally to a secondary battery, and more specifically, to a lithium-ion secondary battery with field electrode near positive electrode for suppressing the growth of lithium dendrite.

### Background of the Invention

Lithium metal has traditionally been regarded as an ideal anode material for high energy density batteries owing to its ultra-high theoretical specific capacity, extremely low redox potential and low density. Developing lithium metal electrodes is of great significance for developing solid-state batteries. However, the safety issues caused by lithium dendrite growth during the cycling process of lithium metal batteries seriously hinder their commercial applications. Lithium dendrites are possibly formed when lithium ions are reduced in the charging process of battery. The growth of lithium dendrites will cause instability at the interface between the electrode and the electrolyte during the cycling process of the lithium-ion battery, destroying the generated solid electrolyte interface (SEI) film. Furthermore, lithium dendrites will continue to consume the electrolyte and lead to irreversible deposition of metallic lithium during the growth process, lowering the coulombic efficiency of the battery. Serious formation of lithium dendrites can even pierce the separator and cause an internal short circuit in the lithium-ion battery, causing thermal runaway of the battery and triggering a combustion explosion. Accordingly, how to suppress lithium dendrite growth and construct safe lithium metal batteries has been one of the goal for those of skilled in the art to strive for.

### Summary of the Invention

In order to suppress the growth of lithium dendrite, the present disclosure hereby provides a novel lithium-ion secondary battery, featuring an additional field electrode near positive electrode for providing an electric field to modify the distribution of cations in the reduction of negative electrode, thereby reducing the chance of dendrite formation.

One objective of present disclosure is to provide a lithium-ion secondary battery, including: a positive electrode, including a first current collector and a first active material on the first current collector; a negative electrode, including a second current collector; a separator, between the positive electrode and the negative electrode; a field electrode, at one side of the positive electrode opposite to the negative electrode; and a first insulating layer, isolated between the positive electrode and the field electrode.

Another objective of present disclosure is to provide a positive electrode structure for lithium-ion secondary battery, including: a positive electrode, including a current collector; a field electrode, at one side of the positive electrode; and a first insulating layer, isolated between the positive electrode and the field electrode.

### Brief Description of the Drawings

The accompanying drawings are included to provide a further understanding of the embodiments, and are incorporated in and constitute a part of this specification. The drawings illustrate some of the embodiments and, together with the description, serve to explain their principles. In the drawings:
FIG. 1 presents a schematic cross-sectional view of a lithium-ion secondary battery in accordance with one embodiment of present disclosure;
FIG. 2 presents a linear perspective drawing of a lithium-ion secondary battery in accordance with another embodiment of present disclosure;
FIG. 3 presents a schematic cross-sectional view of a lithium-ion secondary battery in accordance with another embodiment of present disclosure;
FIG. 4 presents a schematic cross-sectional view of a lithium-ion secondary battery in accordance with yet another embodiment of present disclosure;
FIG. 5 presents a schematic cross-sectional view of a lithium-ion secondary battery in accordance with yet another embodiment of present disclosure; and
FIG. 6 presents a schematic cross-sectional view of a lithium-ion secondary battery in accordance with still another embodiment of the present disclosure;
FIG. 7 presents a schematic cross-sectional view of a lithium-ion secondary battery in accordance with still another embodiment of the present disclosure; and
FIG. 8 presents a comparison graph of the ratio of remaining capacity to the cycle number of lithium-ion secondary batteries of the present invention and conventional skill.
FIG. 9 presents a schematic cross-sectional view of a lithium-ion secondary battery having a dummy electrode structure located at the anode side in accordance with another embodiment of the present disclosure;
FIG. 10 presents a schematic diagram illustrating the electric field and lithium-ion reaction behavior of the lithium-ion secondary battery shown in FIG. 9 during a charging process;
FIG. 11 presents a schematic cross-sectional view of a lithium-ion secondary battery having a dummy electrode structure located at the cathode side in accordance with another embodiment of the present disclosure; and
FIG. 12 presents a schematic diagram illustrating the electric field and lithium-ion reaction behavior of the lithium-ion secondary battery shown in FIG. 11 during a charging process.

It should be noted that all the figures are diagrammatic. Relative dimensions and proportions of parts of the drawings have been shown exaggerated or reduced in size, for the sake of clarity and convenience in the drawings. The same reference signs are generally used to refer to corresponding or similar features in modified and different embodiments.

### Detailed Description

Reference will now be made in detail to exemplary embodiments of the present disclosure, which are illustrated in the accompanying drawings in order to understand and implement the present disclosure and to realize the technical effect. It can be understood that the following description has been made only by way of example, but not to limit the present disclosure. Various embodiments of the present disclosure and various features in the embodiments that are not conflicted with each other can be combined and rearranged in various ways. Without departing from the spirit and scope of the present disclosure, modifications, equivalents, or improvements to the present disclosure are understandable to those skilled in the art and are intended to be encompassed within the scope of the present disclosure.

It should be readily understood that the meaning of "on," "above," and "over" in the present disclosure should be interpreted in the broadest manner such that "on" not only means "directly on" something but also includes the meaning of "on" something with an intermediate feature or a layer therebetween, and that "above" or "over" not only means the meaning of "above" or "over" something but can also include the meaning it is "above" or "over" something with no intermediate feature or layer therebetween (i.e., directly on something). In addition, spatially relative terms (e.g., "beneath," "below," "lower," "above," "upper" and the like) may be used herein for ease of description to describe one element or a relationship between a feature and another element or feature as illustrated in the figures.

As used herein, the term "layer" refers to a material portion including a region with a thickness. A layer can extend over the entirety of an underlying or overlying structure, or may have an extent less than the extent of an underlying or overlying structure. Further, a layer can be a region of a homogeneous or inhomogeneous continuous structure that has a thickness less than the thickness of the continuous structure. For example, a layer can be located between any pair of horizontal planes between, or at, a top surface and a bottom surface of the continuous structure. A layer can extend horizontally, vertically, and/or along a tapered surface. A substrate can be a layer, can include one or more layers therein, and/or can have one or more layer thereupon, thereabove, and/or therebelow. A layer can include multiple layers. For example, an interconnect layer can include one or more conductor and contact layers (in which contacts, interconnect lines, and/or through holes are formed) and one or more dielectric layers.

In general, terminology may be understood at least in part from usage in context. For example, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. Additionally, the term "based on" may be understood as not necessarily intended to convey an exclusive set of factors, but may allow for the presence of other factors not necessarily expressly described, again depending at least in part on the context.

It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

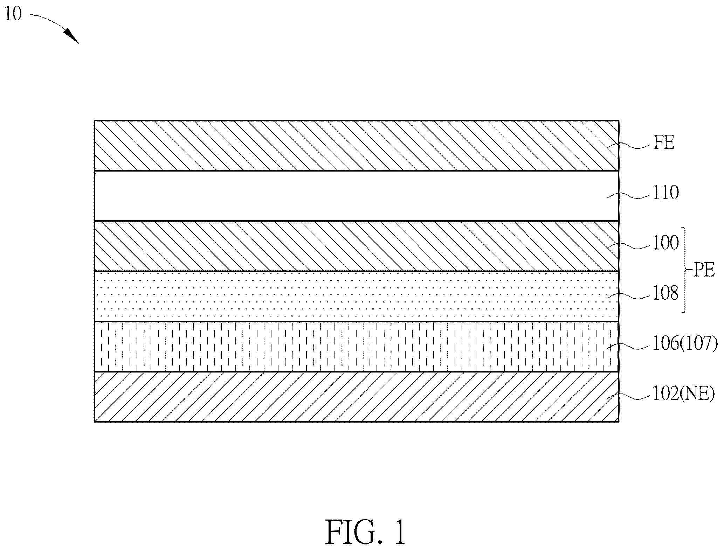

Please refer to FIG. 1, which is a schematic cross-sectional view of a secondary battery in accordance with one embodiment of the present disclosure. The secondary battery 10 of the present disclosure generally includes three electrodes, namely a positive electrode PE, a negative electrode NE and a field electrode FE, respectively, which are essential parts of batteries that can consist of a variety of materials (chemicals) depending on the type of battery, for example, a lithium-ion battery in the present disclosure.

Among them, the positive electrode PE is composed of a first current collector 100 and a first active material 108. The positive electrode PE is the electrode with a higher potential than a corresponding negative electrode, for example, a negative electrode NE. During discharge, the positive electrode PE functions as a cathode, meaning the electrons flow from the electrical circuit through the positive electrode PE into the battery cell. The reduction half-reaction takes place with the electrons arriving from the wire connected to the positive electrode PE. Correspondingly, cations (e.g., Li⁺ ions) are extracted from the negative electrode NE in this process and intercalated into the first active material 108 (e.g., LiCoO₂) of the positive electrode PE through a separator 106 and an electrolyte 107. The main function of first current collector 100 is to collect the current generated by the first active material 108 in this process to form a larger current for external output. To fulfill the purpose, the first current collector 100 needs to be coated and fully contacted with the first active material 108, and its internal resistance should be as small as possible. The first active material 108 is the key to store and deliver electrical energy by facilitating the reversible movement of cations between electrodes and electrolyte and maintaining structural stability during charge-discharge cycles of the battery. In a lithium-ion battery system, the material of first current collector 100 may be selected from aluminum (Al) mesh or foil, nickel (Ni) mesh or foil, and porous carbon paper made up of nanofiber, nanotube, fiber or graphene. For example, an aluminum foil is selected in the embodiment of present disclosure. The material of first active material 108 may be selected from lithium cobalt oxide (LiCoO₂), lithium nickel oxide (LiNiO₂), lithium manganese oxide (LiMnO₂), lithium nickel manganese oxide (LiNiₓMn_{y}O₂), lithium nickel cobalt manganese oxide (LiNiₓMn_{y}Co_{z}O₂) and lithium nickel cobalt aluminum oxide (LiNiₓAl_{y}Co_{z}O₂).

On the other hand, the negative electrode NE is composed solely of a second current collector 102 in this embodiment. The negative electrode NE is the electrode with a lower potential than the corresponding positive electrode PE. During discharge, the negative electrode NE functions as an anode, meaning the current flows from the electrical circuit through the negative electrode NE into the battery cell. The oxidation half-reaction at the negative electrode NE produces positively charged cations (e.g., Li⁺ ions) and negatively charged electrons (e⁻) in the process. The cations move through the electrolyte 107 toward the positive electrode PE, where they recombine with the first active material 108 in the aforementioned reduction half-reaction. Namely, the main function of negative electrode NE is to provide cations for intercalating into the first active material 108 of positive electrode PE. Please note that, since there is no active material on the second current collector 102 in this embodiment, the second current collector 102 in this embodiment needs to function as an active material for the negative electrode NE at the same time in the redox process above. To fulfill this purpose, the second current collector 102 needs vacancies for retaining corresponding cations. In a lithium-ion battery system, the material of second current collector 102 may be selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy.

Refer still to FIG. 1. A separator 106 and an electrolyte 107 are provided between the positive electrode PE and the negative electrode NE. The primary function of separator 106 in the embodiment is to electrically insulate the positive electrode PE and the negative electrode NE from each other. This prevents direct electrical contact between the two electrodes, which could otherwise cause a short circuit and potentially lead to battery failure or safety hazards. In addition, the separator 106 may be porous to allow ion conduction. This enables the flow of ions passing between the positive electrode PE and the negative electrode NE during charge and discharge cycles, which is essential for the battery's operation. The separator 106 may also provide mechanical support and helps maintain the physical integrity of the battery. It keeps the two electrodes apart and ensures that the battery structure remains stable during operation and mechanical stress. In the present disclosure, the material of separator 106 may be selected from polyethylene terephthalate (PET), polyvinylidene fluoride (PVDF), polyamides (Nylons), polyurethanes, polycarbonates, polyesters, polyetheretherketones (PEEK), polyethersulfones (PES), polyimides (PI), polyamide-imides, polyethers, polyoxymethylene, polybutylene terephthalate, polyethylenenaphthenate, polybutene, acrylonitrile-butadiene styrene copolymers (ABS), polystyrene copolymers, polymethylmethacrylate (PMMA), polyvinyl chloride (PVC), polysiloxane polymers, polybenzimidazole (PBI), polybenzoxazole (PBO), polyphenylenes, polyarylene ether ketones, polyperfluorocyclobutanes, polytetrafluoroethylene (PTFE), polyvinylidene fluoride copolymers or terpolymers, polyvinylidene chloride, polyvinylfluoride, liquid crystalline polymers, poly(p-hydroxybenzoic acid), polyaramides and polyphenylene oxide.

With respect to electrolyte 107, the electrolyte 107 serves as the chemical medium through which cations migrate during the charge and discharge cycles, responsible for facilitating the reversible movement of cations between the positive electrode PE and the negative electrode NE. The electrolyte 107 participates in the electrochemical reactions at the two electrodes, and it should be chemically stable and compatible with the electrode materials to ensure proper battery function and longevity. The composition and properties of the electrolyte 107 affect the overall performance, efficiency, and safety of the battery. Factors such as ionic conductivity, stability, and temperature tolerance are critical for optimal battery function. In a lithium-ion battery system, the material of electrolyte 107 may be carbonate ester solvent with lithium salt, ex. LiPF₆, Li₂SO₄, LiFSI, LiBF₄ or LiClO₄.

Refer still to FIG. 1. A feature of the present disclosure is an additional field electrode FE provided at one side of the positive electrode PE opposite to the negative electrode NE. A first insulating layer 110 is provided between the field electrode FE and the positive electrode PE. The first insulating layer 110 is intermediate between the field electrode FE and the positive electrode PE for electrical isolation. In the present disclosure, the field electrode FE can generate an external electric field to suppress the growth of lithium dendrite in charge process. When the electric field is applied, it can enhance the movement of cations through the electrolyte 107 and towards the surface of negative electrode NE, encouraging the cations to deposit more evenly across the negative electrode NE, thereby reducing the likelihood of localized high-current densities that can lead to dendrite formation. Furthermore, by applying an electric field, the energy landscape of the electrode surface can be modified. This modification can increase the energy barrier for nucleation of dendrites, making it more difficult for dendrite crystals to start growing in localized regions. Besides, the electric field can influence the kinetics of the electrochemical reactions occurring at the negative electrode NE. By optimizing the reduction reaction conditions at the negative electrode NE, the field can help in achieving a smoother and more controlled deposition process. The material of field electrode FE in the present disclosure may be, but is not limited to, any electrical conducting materials, for example, aluminum (Al), copper (Cu), nickel (Ni) or titanium (Ti). The material of first insulating layer 110 may be, but is not limited to, any material with good electrical insulation, for example, polyimide (PI), polyethylene (PE), polypropylene (PP) or Epoxy resin. In some embodiment, the positive electrode PE and the field electrode FE may be considered collectively as a positive electrode structure for secondary battery.

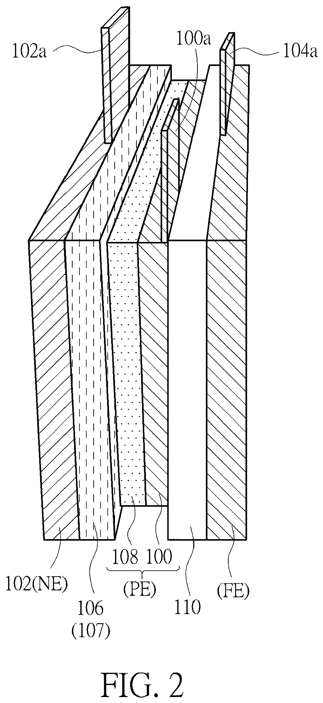

Please refer now to FIG. 2, which is a linear perspective drawing of the lithium-ion secondary battery 10 in accordance with the aforementioned embodiment of present disclosure. With respect to the three electrodes PE, NE and FE of the present disclosure, tab leads 100a, 102a and 104a are provided respectively on the three electrodes PE, NE and FE. More specifically, the tab lead 100a extends upwardly from the first current collector 100 of positive electrode PE. The tab lead 102a extends upwardly from the second current collector 102 of negative electrode NE. The tab lead 104a extends upwardly from the field electrode FE. The tab leads 100a, 102a and 104a play a crucial role in connecting the internal electrodes PE, NE and FE of the battery to the external circuitry, for example, battery terminals. They ensure that the electrical current generated by the battery can flow to and from the external circuits of the device or system. Tab leads 100a, 102a and 104a may also provide mechanical stability to the battery's internal components by connecting them securely to the outer battery terminals. This helps in maintaining the structural integrity of the battery during operation and handling.

Refer still to FIG. 2, in the embodiments of the present disclosure, the generation of the electric field and the corresponding charging mechanism of the secondary battery are described as follows. During charging, the positive terminal of the external power source is connected to the positive tab lead 100a of the positive electrode PE and to the second current collector 102 of the negative electrode NE to provide the driving potential for electric field formation, while the negative terminal of the external power source is connected to the negative tab lead 102a of the negative electrode NE. The connection between the positive terminal and the positive tab lead 100a may be periodically switched on or off at a specific frequency during charging to modulate the electric field distribution. During discharging, the positive terminal is connected to the positive tab lead 100a, and the negative terminal is connected to the negative tab lead 102a to allow current output through the external circuit. The switching frequency for the on/off operation can range from 1 Hz to 1 MHz, and a preferred frequency of 50 kHz may be selected in practical operation.

In this charging-discharging mechanism, applying a periodically varying electric field provides several benefits. First, by oscillating the electric potential at the positive electrode PE with respect to the negative electrode NE, a dynamic electric field can be formed between the electrodes and across the electrolyte, which enhances the mobility and redistribution of lithium ions during charging. This prevents localized ion accumulation and promotes uniform ion flux, thereby reducing the formation of high-current-density regions that typically initiate dendrite growth. Second, operating within the frequency range of 1 Hz to 1 MHz allows the system to adapt to different electrochemical time constants-lower frequencies facilitate deeper ion penetration and stabilization of the solid-electrolyte interface (SEI), while higher frequencies improve surface charge homogeneity and decrease polarization effects. In particular, the selection of around 50 kHz achieves a balanced condition between ionic response and electric field uniformity, leading to smoother lithium deposition, improved Coulombic efficiency, and extended cycle life. Furthermore, the frequency-controlled electric field modulation also contributes to suppressing parasitic side reactions between lithium and electrolyte, ensuring better long-term safety and reliability of the secondary battery.

Refer still to FIG. 2. It should be known that the overlapping area of the separator 106 should be larger than the one of the first active material 108 and second active material (if any) at two sides in order to provide complete electrical isolation therebetween. Similarly, the overlapping area of the field electrode FE should be larger than the one of adjacent first current collector 100 in order to provide complete electrical isolation therebetween and provide complete electric field distribution for suppressing the growth of lithium dendrite in charge process. In this manner, the capacitance of the field electrode FE will be greater than that of the first current collector 100.

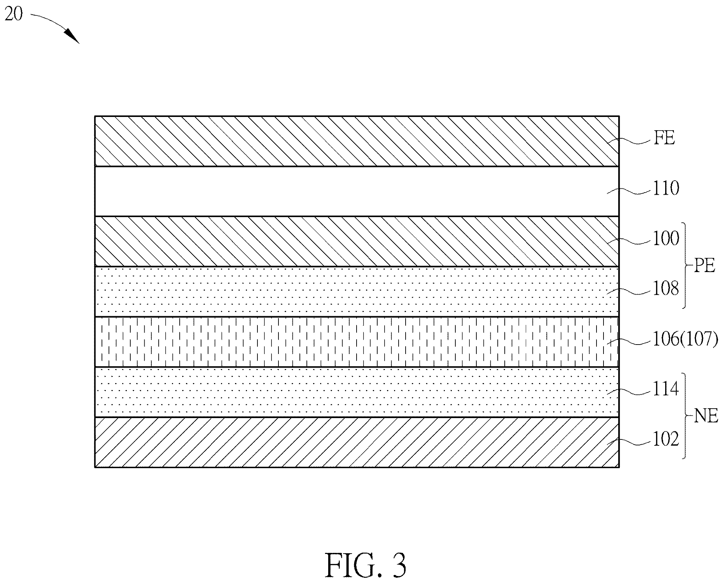

Please refer now to FIG. 3, which is a schematic cross-sectional view of a lithium-ion secondary battery 20 in accordance with another embodiment of present disclosure. The embodiment of FIG. 3 is much the same as the aforementioned embodiment of FIG. 1, with difference that a second active material 114 is provided on the second current collector 102 of negative electrode NE. The second current collector 102 in this embodiment functions purely as a collector for collecting the current generated by the second active material 114. The second current collector 102 needs to be coated and fully contacted with the second active material 114, and its internal resistance should be as small as possible. In a lithium-ion battery system, the material of second current collector 100 may be selected from copper (Cu), titanium (Ti) and nickel (Ni). With respect to the second active material 114, the second active material 114 in this embodiment needs to provide vacancies for retaining corresponding cations. In a lithium-ion battery system, the material of second active material 114 may be selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy.

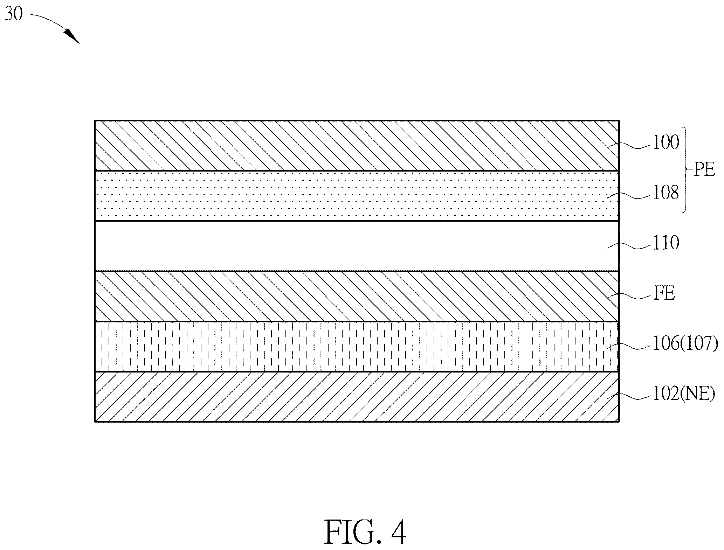

Refer now to FIG. 4, which illustrates a schematic cross-sectional view of a lithium-ion secondary battery 30 in accordance with yet another embodiment of present disclosure. The embodiment of FIG. 4 is much the same as the aforementioned embodiment of FIG. 1, with difference that the field electrode FE is positioned between the positive electrode PE and the negative electrode NE. As depicted in FIG. 4, the field electrode FE is situated at one side of the separator 106 opposite to the negative electrode NE, with the first insulating layer 110 serving to electrically isolate the field electrode FE from the positive electrode PE at the other side. In this embodiment, the configuration of lithium-ion secondary battery 30 also facilitates the generation of an additional electric field, which modifies the distribution of cations during the reduction of negative electrode NE, similar to the previous embodiments. Furthermore, when the distance between the field electrode FE and the negative electrode NE is reduced, the electric field intensity increases.

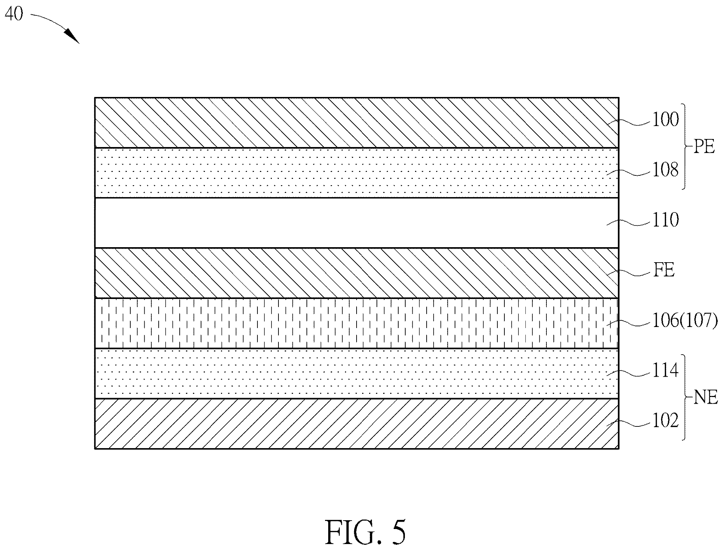

Refer now to FIG. 5, which illustrates a schematic cross-sectional view of a lithium-ion secondary battery 40 in accordance with yet another embodiment of present disclosure. The embodiment of FIG. 5 is much the same as the aforementioned embodiment of FIG. 4, with difference that a second active material 114 is provided on the second current collector 102 of negative electrode NE. The second current collector 102 in this embodiment functions purely as a collector for collecting the current generated by the second active material 114. The second current collector 102 needs to be coated and fully contacted with the second active material 114, and its internal resistance should be as small as possible. In a lithium-ion battery system, the material of second current collector 100 may be selected from copper (Cu), titanium (Ti) and nickel (Ni), and the material of second active material 114 may be selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy. The second active material 114 in this embodiment needs to provide vacancies for retaining corresponding cations.

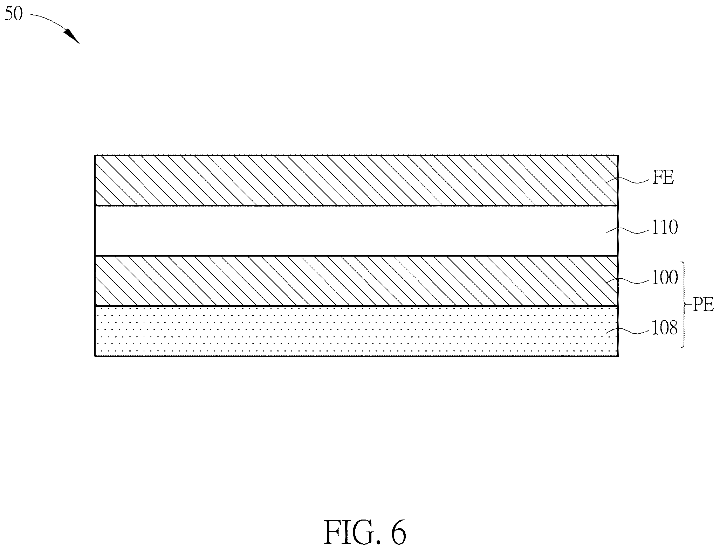

Please refer now to FIG. 6, which illustrates a schematic cross-sectional view of a lithium-ion secondary battery 50 in accordance with still another embodiment of the present disclosure. The lithium-ion secondary battery 50 includes, from bottom to top, a first active material 108, a first current collector 100, a first insulating layer 110, and a field electrode FE. The first active material 108 and the first current collector 100 together constitute a positive electrode PE, while the first insulating layer 110 is disposed between the positive electrode PE and the field electrode FE for electrical isolation. The components and materials of this embodiment are consistent with those described in the foregoing embodiments.

In this embodiment, the capacitance of the field electrode FE is greater than that of the first current collector 100. By disposing the first insulating layer 110 between the positive electrode PE and the field electrode FE, the electric field generated by the field electrode FE can be effectively applied across the entire surface of the positive electrode. This configuration provides several advantages, including a more uniform potential gradient within the positive electrode, which promotes even ion migration and suppresses localized accumulation of charge carriers. Consequently, the electrochemical stability of the positive electrode is enhanced, resulting in improved cycling performance and reduced risk of abnormal polarization during charging and discharging.

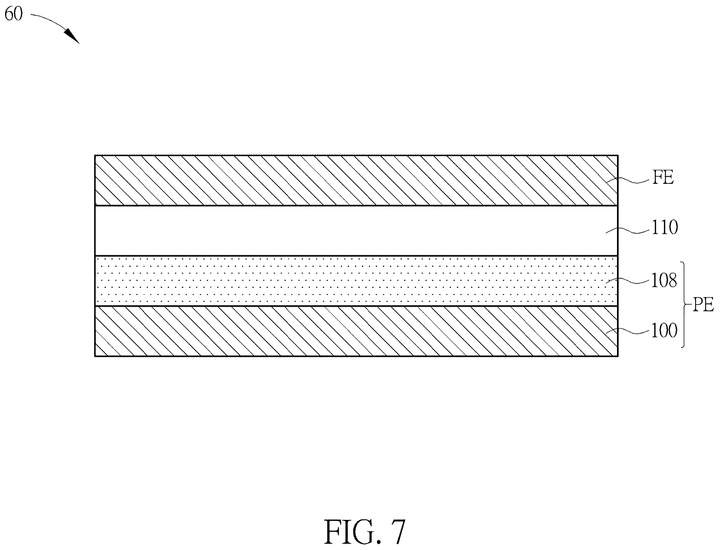

Please refer now to FIG. 7, which illustrates a schematic cross-sectional view of a lithium-ion secondary battery 60 in accordance with still another embodiment of the present disclosure. The lithium-ion secondary battery 60 includes, from bottom to top, a first current collector 100, a first active material 108, a first insulating layer 110, and a field electrode FE. The first current collector 100 and the first active material 108 together constitute a positive electrode PE, and the first insulating layer 110 is positioned between the positive electrode PE and the field electrode FE. The components and materials used in this embodiment are consistent with those described in the aforementioned embodiments.

In this embodiment, the capacitance of the field electrode FE is greater than that of the first current collector 100. By placing the first insulating layer 110 between the positive electrode PE and the field electrode FE, an enhanced electric field coupling effect can be achieved. This configuration allows the field electrode FE to modulate the potential distribution across the active material 108, leading to more uniform ion intercalation and extraction during cycling. As a result, the embodiment provides improved charge-discharge uniformity, reduced side reactions, and enhanced energy retention over prolonged operation.

Please note that in the embodiments of the lithium-ion secondary batteries 50 and 60 as shown in FIGS. 6 and 7, the primary structural difference from the foregoing embodiments lies in the absence of a negative electrode NE. Nevertheless, these embodiments still represent a feasible and functional battery configuration. In such a design, the field electrode FE and the positive electrode PE together establish an electric field distribution sufficient to control the migration and accumulation behavior of cations within the electrolyte during charging and discharging. The field electrode FE may serve as a potential reference or as a charge-balancing element that regulates the surface potential of the positive electrode, thereby maintaining ion equilibrium within the system even without a separately defined negative electrode. As a result, electrochemical activity can still occur through controlled polarization between the field electrode FE and the positive electrode PE, enabling the device to perform charge-discharge operations in a simplified electrode configuration.

Compared with the foregoing embodiments that include a distinct negative electrode NE, the configurations of the lithium-ion secondary batteries 50 and 60 offer several advantages. The simplified electrode stack reduces internal resistance and overall thickness, thereby improving energy density and mechanical flexibility. Furthermore, by eliminating the negative electrode NE, the complexity of electrode alignment and separator placement can be reduced, enhancing manufacturability and lowering production cost. The electric field generated by the field electrode FE can also be more directly coupled to the active surface of the positive electrode PE, providing more precise control over cation distribution and improving overall charge uniformity within the cell.

In comparison with conventional battery structures that include only a positive electrode PE without a field electrode, the embodiments of the present disclosure additionally provide the field electrode FE, which introduces an adjustable electric field capable of dynamically modulating the potential profile within the battery. This added element enables suppression of localized high-current regions, stabilization of the electrode-electrolyte interface, and reduction of dendrite formation risk when lithium metal or other reactive materials are employed. Consequently, the overall cycling stability, safety performance, and operational reliability of the lithium-ion secondary battery can be significantly improved.

It should be obvious to those of skilled in the art that the aforementioned structure and components of second battery may be manufactured, assembled, contained in various forms and configurations, each tailored to specific applications, requirements or designs, for example, in a form of cylindrical cell, prismatic cell, pouch cell, button cell, square cell, flexible battery or custom shaped cell, with container like metal cans, plastic containers, custom enclosures. The choice of battery type and container depends on the specific requirements of the application, including space constraints, energy density, weight, and thermal management needs. Since these components are conventional to those of skilled in the art and not key features of the present disclosure, relevant detailed description will be herein omitted without obscuring the subject and technical features of the present disclosure.

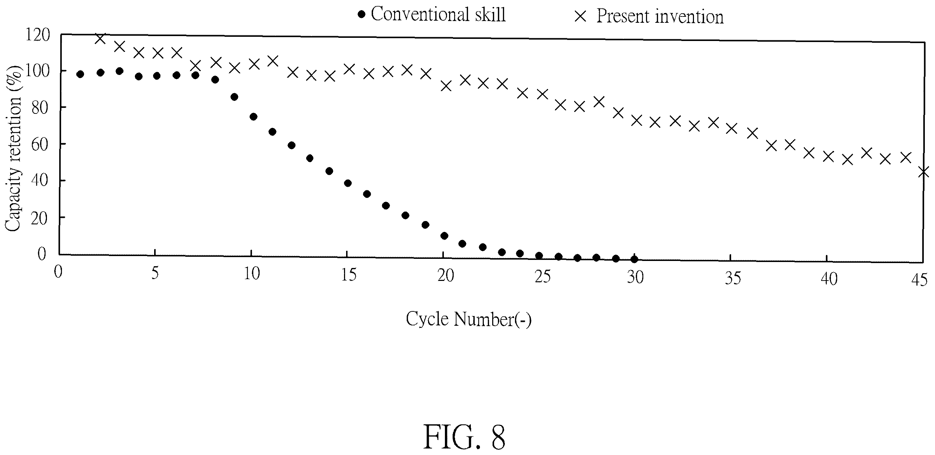

Please refer now to FIG. 8, which is a comparison graph of the ratio of remaining capacity to the cycle time of lithium-ion secondary batteries of the present invention and conventional skill. Take the structure of the lithium-ion secondary battery in FIG. 6 of the present invention as an example, in which the first active material 108 of the positive electrode PE is lithium cobalt manganese oxide with a thickness of 25 µm, the first current collector 100 is aluminum metal with a thickness of 20 µm, the first insulating layer 110 is made of polyimide with a thickness of 25 µm, and the field electrode FE is copper metal with a thickness of 40 µm. In contrast, the conventional battery adopts a traditional electrode structure including an electrode substrate with a thickness of 10 µm and an active material layer coated thereon with a thickness of 50 µm. The electrolyte used in both cases is a carbonate-based electrolyte.

The charging method is conducted with constant voltage (4.5 V) charging to the battery voltage (4.2 V), in which the field electrode FE provides a potential difference of 4.5 V between the positive electrode PE and the field electrode FE. The electric field intensity corresponds to the product of 4.5 V and the distance between the positive electrode and the field electrode. The average charging rate is 0.4 C (representing 0.4 times the total capacity in 1 hour). Each charging and discharging operation is considered as a cycle.

As can be seen from the figure, compared with the conventional skill without the additional field electrode, the present invention uses the field electrode FE to control the lithium-ion concentration and charge distribution on the surface of lithium metal, increasing the probability of lithium-ion reduction reaction, and reducing the chance of lithium metal to react with the electrolyte and form dendrites, thereby reducing the loss ratio of lithium ions. When the battery capacity declines to 60%, the cycle number of the embodiment of the present invention can reach 39 times, while the conventional battery only reaches 12 times. This result demonstrates that the field electrode FE effectively stabilizes lithium-ion transport and significantly improves the charge-discharge cycling performance of the lithium-ion secondary battery.

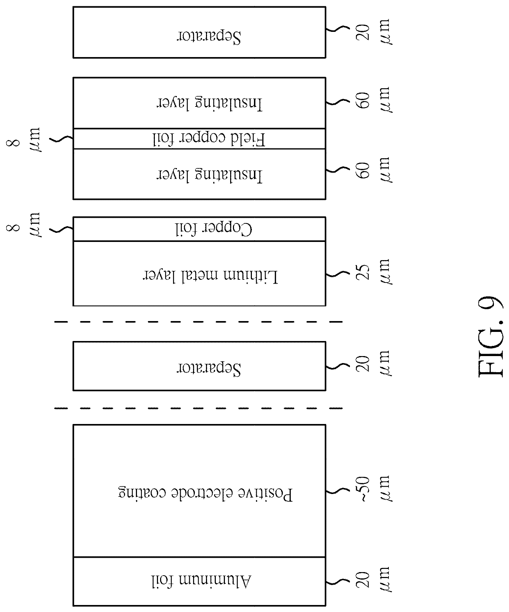

Please refer now to FIG. 9, which illustrates a schematic cross-sectional view of another embodiment of the present disclosure, in which a dummy electrode structure is located at the anode side. This embodiment is mainly designed to simulate the layer configuration when the field electrode is disposed on the anode side. From left to right, the structure includes: an aluminum foil (serving as the positive current collector), a positive electrode coating, a separator, a lithium metal layer (serving as the negative active layer), a copper foil, a first insulating layer, a field copper foil (FE), a second insulating layer, and a separator. In this embodiment, the exemplary thicknesses of each layer from left to right are as follows: the aluminum foil and positive coating together having a total thickness of about 20 to 50 µm, the separator 20 µm, the lithium metal layer 25 µm, the copper foil 8 µm, each insulating layer 60 µm, the field copper foil 8 µm, and the final separator 20 µm. This structure is used to simulate the formation of an electric field on the anode side to influence the electrochemical behavior of lithium-ion reduction and deposition, serving as a reference embodiment for comparing the effects of different electric field configurations.

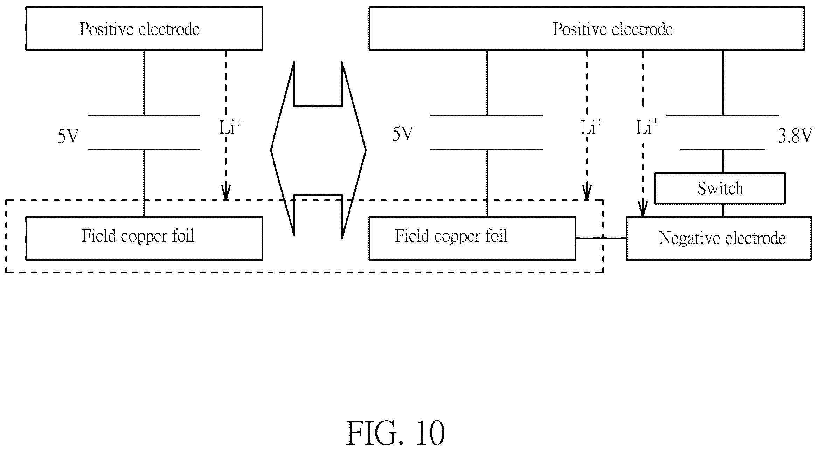

Please refer now to FIG. 10, which illustrates a schematic diagram of the potential and electrochemical reactions of the structure shown in FIG. 9 during a charging process. In this embodiment, an external power source applies a bias voltage of approximately 5 volts (V) to the field copper foil (FE), forming an additional electric field between the positive electrode and the negative electrode to adjust the distribution of lithium ions within the electrolyte. Under the influence of this electric field, lithium ions migrating from the positive electrode toward the negative electrode can move and deposit more uniformly on the surface of the lithium metal layer, thereby reducing the formation of localized high-current-density regions. It should be noted that in this embodiment, the field copper foil (FE) is isolated from the electrolyte by insulating layers, ensuring that no direct chemical reaction occurs and that a stable lithium reduction potential can be maintained. This design demonstrates that even when the field electrode is disposed on the anode side, a controllable and stable electric field can still be formed to suppress dendrite growth as long as proper insulation from the electrolyte is maintained.

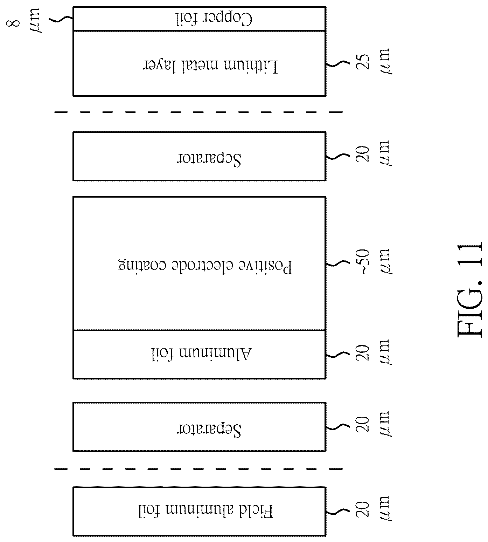

Please refer now to FIG. 11, which illustrates a schematic cross-sectional view of another embodiment of the present disclosure, in which a dummy electrode structure is located at the cathode side. This embodiment simulates the stacking relationship when the field electrode is disposed on the outer side of the positive electrode. From left to right, the structure includes: a field aluminum foil (FE), a separator, an aluminum foil (serving as the positive current collector), a positive electrode coating, a separator, a lithium metal layer (serving as the negative active layer), and a copper foil (serving as the negative current collector). The exemplary thicknesses of each layer from left to right are: the field aluminum foil 20 µm, the separator 20 µm, the aluminum foil and positive coating together 20 to 50 µm, the separator 20 µm, the lithium metal layer 25 µm, and the copper foil 8 µm. This embodiment corresponds to one of the main structural configurations of the present invention, in which the field electrode is positioned on the outer side of the positive electrode and isolated from the electrolyte by insulating layers, thereby forming a stable electric field without triggering chemical reactions.

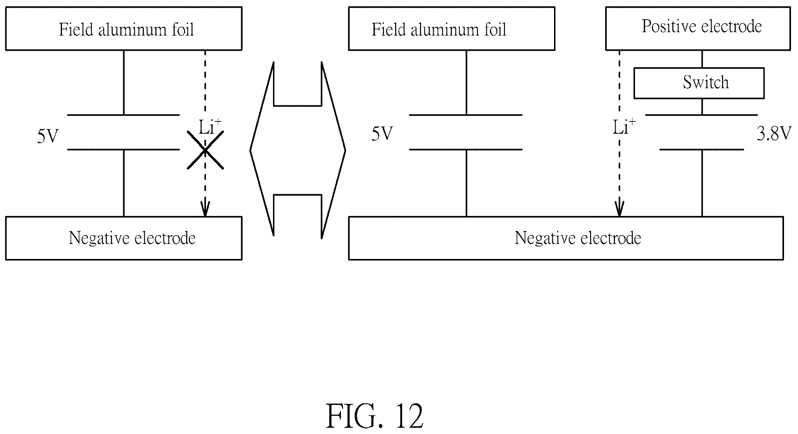

Please refer now to FIG. 12, which illustrates a schematic diagram of the potential and electrochemical reactions of the structure shown in FIG. 11 during a charging process. In this embodiment, if the field aluminum foil (FE) is directly in contact with the electrolyte, side reactions may occur during the first charging cycle, such as oxidation leading to the formation of aluminum fluoride (Al₂O₃ + 6HF → 2AlF₃ + 3H₂O), resulting in oxide formation on the surface of the field aluminum foil and degradation of its conductivity. However, when an insulating layer is provided between the field aluminum foil (FE) and the electrolyte, the electric field can be stably established and effectively control the migration and distribution of lithium ions without causing any chemical reaction. Accordingly, positioning the field electrode on the outer side of the positive electrode and isolating it with insulating layers can maintain material stability while continuously providing a controllable electric field, thereby suppressing dendrite growth and extending the service life of the lithium-ion secondary battery.

## Claims

1. A lithium-ion secondary battery (20), comprising:
a positive electrode (PE) comprising a first current collector (100) and a first active material (108) disposed on the first current collector (100);
a negative electrode (NE) comprising a second current collector (102);
a separator (106) disposed between the positive electrode (PE) and the negative electrode (NE);
a field electrode (FE) disposed at one side of the positive electrode (PE) opposite to the negative electrode (NE); and
a first insulating layer (110) disposed between the positive electrode (PE) and the field electrode (FE).

2. The lithium-ion secondary battery (20) according to claim 1, further comprising a second active material (114) disposed between the second current collector (102) and the separator (106).

3. The lithium-ion secondary battery (20) according to claim 2, wherein a material of the second active material (114) is selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite, and lithium alloy.

4. The lithium-ion secondary battery (20) according to claim 1, wherein a material of the first active material (108) is selected from lithium cobalt oxide (LiCoO₂), lithium nickel oxide (LiNiO₂), lithium manganese oxide (LiMnO₂), lithium nickel manganese oxide (LiNixMnyO₂), lithium nickel cobalt manganese oxide (LiNixMnyCozO₂), and lithium nickel cobalt aluminum oxide (LiNixAlyCozO₂).

5. The lithium-ion secondary battery (20) according to claim 1, wherein a material of the first current collector (100) is selected from aluminum (Al) mesh, nickel (Ni) mesh, and porous carbon paper comprising nanofiber, nanotube, fiber, or graphene.

6. The lithium-ion secondary battery (20) according to claim 1, wherein a material of the second current collector (102) is selected from copper (Cu), titanium (Ti), and nickel (Ni).

7. The lithium-ion secondary battery (20) according to claim 1, wherein a material of the separator (106) is selected from polyethylene terephthalate (PET), polyvinylidene fluoride (PVDF), polyamides (Nylons), polyurethanes, polycarbonates, polyesters, polyetheretherketones (PEEK), polyethersulfones (PES), polyimides (PI), polyamide-imides, polyethers, polyoxymethylene, polybutylene terephthalate, polyethylenenaphthenate, polybutene, acrylonitrile-butadiene-styrene copolymers (ABS), polystyrene copolymers, polymethylmethacrylate (PMMA), polyvinyl chloride (PVC), polysiloxane polymers, polybenzimidazole (PBI), polybenzoxazole (PBO), polyphenylenes, polyarylene ether ketones, polyperfluorocyclobutanes, polytetrafluoroethylene (PTFE), polyvinylidene fluoride copolymers or terpolymers, polyvinylidene chloride, polyvinylfluoride, liquid crystalline polymers, poly(p-hydroxybenzoic acid), polyaramides, and polyphenylene oxide.

8. The lithium-ion secondary battery (20) according to claim 1, further comprising an electrolyte (107) disposed within the lithium-ion secondary battery (20), wherein the electrolyte (107) is separated from the field electrode (FE) by the first insulating layer (110).

9. The lithium-ion secondary battery (20) according to claim 8, wherein a solvent of the electrolyte (107) comprises carbonate ester and a lithium salt selected from LiPF₆, Li₂SO₄, LiFSI, LiBF₄, or LiClO₄.

10. The lithium-ion secondary battery (20) according to claim 1, further comprising tab leads (100a, 102a, 104a) respectively extending from the positive electrode (PE), the negative electrode (NE), and the field electrode (FE).

11. The lithium-ion secondary battery (20) according to claim 1, wherein a capacitance of the field electrode (FE) is greater than a capacitance of the first current collector (100).

12. A positive electrode structure for a lithium-ion secondary battery (50), comprising:
a positive electrode (PE) comprising a current collector (100);
a field electrode (FE) disposed at one side of the positive electrode (PE), wherein a capacitance of the field electrode (FE) is greater than a capacitance of the current collector (100); and
a first insulating layer (110) disposed between the positive electrode (PE) and the field electrode (FE).

13. The positive electrode structure according to claim 12, further comprising an active material (108) disposed on a side of the current collector (100) opposite to the field electrode (FE).

14. The positive electrode structure according to claim 12, wherein a material of the active material (108) is selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite, and lithium alloy.

15. A charging and discharging method for a lithium-ion secondary battery (20), the lithium-ion secondary battery (20) comprising a positive electrode (PE) having a first current collector (100) and a first active material (108), a negative electrode (NE) having a second current collector (102), a separator (106) between the positive electrode (PE) and the negative electrode (NE), a field electrode (FE) disposed at one side of the positive electrode (PE) opposite to the negative electrode (NE), a first insulating layer (110) between the positive electrode (PE) and the field electrode (FE), and tab leads (100a, 102a, 104a) respectively extending from the positive electrode (PE), the negative electrode (NE), and the field electrode (FE), the method comprising:
connecting a positive terminal line to the positive tab lead (100a) of the positive electrode (PE) and to the second current collector (102) of the negative electrode (NE) during charging, and connecting a negative terminal line to the negative tab lead (102a) of the negative electrode (NE);
periodically switching connection between the positive terminal line and the positive tab lead (100a) of the positive electrode (PE) according to a predetermined frequency;
connecting the positive terminal line to the positive tab lead (100a) of the positive electrode (PE) and the negative terminal line to the negative tab lead (102a) of the negative electrode (NE) during discharging;
wherein the predetermined frequency ranges from 1 Hz to 1 MHz.
